# EUROPEAN PATENT APPLICATION

(11) **EP 4 579 554 A1**
(43) Date of publication of application: **02.07.2025**
(21) Application number: 23220317.4
(22) Date of filing: 27.12.2023
(51) Int. Cl.: G06Q 20/06, G06Q 20/22, G06Q 20/36

(54) **SECURE TOKEN TRANSACTION UNIT, SERVICE PROVIDER UNIT, INTERNAL BRIDGE UNIT, ELECTRONIC TOKEN TRANSACTION SYSTEM, METHODS FOR ISSUING A SECURE TOKEN TRANSACTION UNIT**

(71) Applicant: Giesecke+Devrient advance52 GmbH, 81677 München (DE)
(72) Inventor: Bohn, Markus, 81677 München (DE); Seidemann, Wolfram, 81827 München (DE)
(74) Representative: Giesecke+Devrient IP

(57) **Abstract**

A secure token transaction unit (TU) comprising a token storage unit (101) configured for storing at least one token of the electronic token transaction system (TS); a limit storage unit (102) configured for storing at least one dynamic token limit, in particular a dynamic monetary value limit of the token; and an offline token transaction unit (103) configured for checking if an offline token transaction meets the dynamic token limit.

## Description

The invention relates to a secure token transaction unit. The invention also refers to a service provider unit. The invention also relates to a common internal bridge unit. The invention also relates to an electronic token transaction system in particular an electronic payment transaction system. The invention also relates to methods for issuing a secure token transaction unit.

In electronic transaction systems there are electronic transactions provided. Electronic transactions, such as electronic payment transactions, can be made on an account-based model, e.g. online, or a token-based, e.g. offline, model. A transaction in the account-based model triggers nodes to decrement the balance of the payer's account, e.g. bank account, and increment the balance of the payee's account. Alternatively, in a token-based model, tokens are directly (or indirectly) transferred between payer and payee, e.g. using electronic wallets etc. Both models are applicable within this disclosure.

Tokens - also referred to as digital assets, electronic coins, coin data sets - may represent any digital asset, in particular a digital currency, preferably a central bank digital currency, short CBDC. These tokens are minted and melted by an issuing unit or dismissing unit of the token transaction system, such as an issuing authority, or a central bank unit or a commercial bank unit. The token comprises a value (v) and a token reference (r) but is not limited thereto.

There are different technical approaches for exchanging electronic tokens such as a digital asset e.g., digital currency such as CBDC, issued by a central bank within the electronic tokens transaction system.

Electronic token transactions and/or storage of tokens and any associated transaction data and/or storage data in an electronic token transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

In conventional electronic token transaction systems, token limits of offline token transactions are fix and not changeable. Since in modern electronic token transaction systems a fix/ unchangeable are unsuitable due to the increased frequency and quantity of token transactions, there is a need to provide a possibility for updating the token limits in an easy and fast manner.

The above-identified objectives are solved with the features of the independent patent claims. Further advantageous embodiments are described in the dependent patent claims.

In an aspect of the present invention there is provided a secure token transaction unit. The secure token transaction unit comprises a token storage unit configured for storing at least one token of the electronic token transaction system, a limit storage unit configured for storing at least one dynamic token limit, in particular a dynamic monetary value limit of the secure token transaction unit, and an offline token transaction unit configured for checking if an offline token transaction meets the dynamic token limit.

The secure token transaction unit may represent any unit being configured for storing online and/or offline token, in particular only offline token, to be directly exchanged between users/participants of an electronic token transaction system. The secure electronic token transaction unit may be called a wallet, a payment application unit or a secure element but is not limited thereto. The secure token transaction unit may comprise a token storage unit, a limit storage unit, and an offline token transaction unit but is not limited thereto. The secure token transaction unit may comprise a dynamic token limit update receiving unit but is not limited thereto. The secure token transaction unit may comprise at least one permission storing unit but is not limited thereto.

The token storage unit may represent any unit of the secure electronic token transaction unit, being configured for storing, i.e. temporarily or permanently storing, one or more token of the electronic token transaction system. For instance, the token storage unit may include a data storage or a memory. The data storage or the memory may be included in the token storage unit or may be arranged external to the token storage unit, wherein the data storage or memory is directly communicatively coupled to the token storage unit. Additionally, when the data storage or the memory may be included in the token storage unit or may be arranged external to the token storage unit, the token storage unit further comprises a processing unit for transmitting at least one token to be stored to the data storage or the memory and for receiving at least one stored token from the data storage or the memory.

The limit storage unit may represent any unit of the secure electronic token transaction unit, being configured for storing, i.e. temporarily or permanently storing, one or more dynamic token limits, in particular dynamic monetary value limit of the secure token transaction unit. For instance, the limit storage unit may include a data storage or a memory. The data storage or the memory may be included in the limit storage unit or may be arranged external to the limit storage unit, wherein the data storage or memory is directly communicatively coupled to the limit storage unit. Additionally, when the data storage or the memory may be included in the limit storage unit or may be arranged external to the limit storage unit, the limit storage unit further comprises a processing unit for transmitting at least one dynamic token limit to be stored to the data storage or the memory and for receiving at least one stored dynamic token limit from the data storage or the memory.

The dynamic token limit may represent any limit respectively threshold of the maximum number of token, i.e. online or offline token, in particular only offline token, or the maximum number of the monetary value of the token, in particular offline token, storable in the token storage unit of the secure token transaction unit. The dynamic token limit may be a number but is not limited thereto. The dynamic token limit may comprise or may consist of an online token limit and an offline token limit. In this context, the term "dynamic" represents that the token limit is variable or changeable, in particular not fix. Additionally, the term "dynamic" may represent that the token limit is changeable by sending/receiving additional token limit updates. The dynamic token limit may comprise or consist of a limit and/or a holding permission but is not limited thereto. In this context, the limit may be a fix or updatable number indicating e.g. a median number of token or median number of monetary values of the token to be storable in the token storage unit. In this context, the holding permission may be a fix or updatable number affecting respectively having an influence on the limit. For instance, the limit may be 50 and the permission may be 200 such that a dynamic token limit of 250 is available. The holding permissions may be deleted after the sending to at least one other secure token transaction unit or may be stored after the receiving and adding to the limit but is not limited thereto. Therefore, the dynamic token limit, in particular the dynamic monetary value limit of the secure token transaction unit, may be updatable or changeable by remotely updatable data elements like a limit update and/or an adding of one or more holding permission. The holding permission and/or the limit may be created respectively generated by the offline token limit managing unit or the user directory service unit. The holding permission may be stored in a holding permission storage. The holding permission storage may be arranged or located in the secure token transaction unit. The holding permission storage unit may represent any unit of the secure electronic token transaction unit, being configured for storing, i.e. temporarily or permanently storing, one or more holding permissions. For instance, the holding permission storage unit may include a data storage or a memory. The data storage or the memory may be included in the holding permission storage unit or may be arranged external to the holding permission storage unit, wherein the data storage or memory is directly communicatively coupled to the holding permission storage unit. Additionally, when the data storage or the memory may be included in the holding permission storage unit or may be arranged external to the holding permission storage unit, the holding permission storage unit further comprises a processing unit for transmitting at least one holding permission to be stored to the data storage or the memory and for receiving at least one stored holding permission from the data storage or the memory.

The offline token transaction unit may represent any unit configured for checking or proving if an offline token transaction meets, i.e. fulfills or is in the range of, the dynamic token limit. Additionally, the offline token transaction unit may be configured for providing, i.e. transmitting, at least one offline token transaction, i.e. sending of an offline token, to at least one other secure token transaction unit and for receiving at least one offline token transaction from at least one other secure token transaction unit. The offline token transaction unit may be directly or indirectly communicatively coupled to at least one other secure token transaction unit but is not limited thereto. Further, the offline token transaction unit may be configured for providing at least one holding permission to at least one other secure token transaction unit and/or for receiving at least one holding permission from at least one other secure token transaction unit.

The dynamic token limit update receiving unit may represent any unit being configured for receiving at least one dynamic limit update, in particular dynamic limit update data, from at least one service provider unit, in particular from an offline token providing unit of the service provider unit. Specifically, the dynamic token limit update receiving unit may be configured for receiving at least one limit and/or at least one holding permission from the at least one service provider unit. Additionally, the dynamic token limit update receiving unit may be configured for updating or changing the dynamic token limit in the limit storage unit based on the received dynamic token limit update. For instance, in case the dynamic token limit update indicates and/or initiates an increase of the token limit, the dynamic token limit will be increased. In case the dynamic token limit update indicates and/or initiates a decrease of the token limit, the dynamic token limit will be decreased. The dynamic token limit update receiving unit may be arranged in the secure token transaction unit but is not limited thereto.

The at least one service provider unit may represent any unit of a service provider. For instance, a service provider may be a financial service provided, FSP, like a bank but is not limited thereto. The service provider unit may comprise an offline token limit managing unit and a common internal bridge unit but is not limited thereto. The service provider unit further comprises at least one hosted secure token transaction unit but is not limited thereto.

The offline token limit managing unit may represent any unit being configured for managing, i.e. setting or initiating an updating of, a dynamic token limit of the at least one service token transaction unit. The offline token limit managing unit may be arranged respectively located in the service provider unit but is not limited thereto. Additionally, the offline token managing unit may be configured for managing the offline token limit of the service provider unit but is not limited thereto. In this context, the "managing" may include that a dynamic token limit update, e.g. including an update for the limit and/or an update for the holding permission, may be provided by the offline token limit managing unit based on a dynamic offline token limit instruction and may be transmitted to the at least one secure token transaction unit but is not limited thereto. This is provided by an offline token limit providing unit.

The offline token limit providing unit may represent any unit being configured for providing, i.e. generating and/or transmitting, a dynamic offline token limit update to a dynamic token limit update receiving unit of at least one secure token transaction unit. The offline token limit providing unit may be arranged respectively located in the offline token limit managing unit of the service provider unit.

The internal bridge unit may represent any unit being configured for providing an offline-to-online or online-to-offline exchange of the electronic token transaction system but is not limited thereto. In other words, the internal bridge unit provides an exchange of an offline token from/to an online transaction system of the electronic token transaction system. The exchange may be provided online-to-offline or offline-to online but is not limited thereto. Additionally, the internal bridge unit may be configured for optionally transmitting/receiving an offline token from the service provider unit to at least one secure token transaction unit. The internal bridge unit may be arranged respectively located in the service provider unit but is not limited thereto. For instance, the internal bridge unit may have creation rights in the register for creating an offline token or includes offline token being in a hosted secure token transaction unit of the service provider.

The dynamic offline token limit instruction receiving unit may represent any unit being configured for receiving a dynamic offline token limit instruction from a common service provider, in particular from a user directory service unit of the electronic token transaction system. The dynamic offline token limit instruction may represent any instruction to update or change a dynamical token limit in the at least one secure token transaction unit but is not limited thereto. The dynamic offline token limit instruction receiving unit may be located respectively arranged in the offline token limit managing unit of the service provider unit.

The at least one hosted secure token transaction unit may represent any secure token transaction unit being hosted by a service provider unit. For instance, the hosted secure token transaction unit may be hosted by a bank, i.e. being a bank account but is not limited thereto.

The token storage unit of the hosted secure token transaction unit may represent any unit of the hosted secure token transaction unit, being configured for storing, i.e. temporarily or permanently storing, one or more token of the electronic token transaction system. For instance, the token storage unit may include a data storage or a memory. The data storage or the memory may be included in the token storage unit or may be arranged external to the token storage unit, wherein the data storage or memory is directly communicatively coupled to the token storage unit. Additionally, when the data storage or the memory may be included in the token storage unit or may be arranged external to the token storage unit, the token storage unit further comprises a processing unit for transmitting at least one token to be stored to the data storage or the memory and for receiving at least one stored token from the data storage or the memory.

The limit storage unit of the hosted secure token transaction unit may represent any unit of the hosted secure token transaction unit, being configured for storing, i.e. temporarily or permanently storing, one or more dynamic token limits, in particular monetary value limits of the token. For instance, the limit storage unit may include a data storage or a memory. The data storage or the memory may be included in the limit storage unit or may be arranged external to the limit storage unit, wherein the data storage or memory is directly communicatively coupled to the limit storage unit. Additionally, when the data storage or the memory may be included in the limit storage unit or may be arranged external to the limit storage unit, the limit storage unit further comprises a processing unit for transmitting at least one dynamic token limit to be stored to the data storage or the memory and for receiving at least one stored dynamic token limit from the data storage or the memory.

The offline token transaction unit of the hosted secure token transaction unit may represent any unit of the hosted secure token transaction unit configured for checking if an offline token transaction meets, i.e. fulfills or is in the range of, the dynamic token limit. Additionally, the offline token transaction unit may be configured for providing and/or receiving at least one offline token transaction to at least one other secure token transaction unit. Furthermore, the offline token transaction unit may be configured for providing and/or receiving at least one holding permission to at least one other secure token transaction unit.

The at least one hosted service provider offline transaction unit, i.e. hosted service provider wallet, may represent any service provider offline unit transaction unit being hosted by a service provider unit.

The token storage unit of the hosted service provider offline transaction unit may represent any unit of the hosted service provider offline transaction unit, being configured for storing, i.e. temporarily or permanently storing, one or more token of the electronic token transaction system. For instance, the token storage unit may include a data storage or a memory. The data storage or the memory may be included in the token storage unit or may be arranged external to the token storage unit, wherein the data storage or memory is directly communicatively coupled to the token storage unit. Additionally, when the data storage or the memory may be included in the token storage unit or may be arranged external to the token storage unit, the token storage unit further comprises a processing unit for transmitting at least one token to be stored to the data storage or the memory and for receiving at least one stored token from the data storage or the memory.

The limit storage unit of the hosted service provider offline transaction unit may represent any unit of the hosted service provider offline transaction unit, being configured for storing, i.e. temporarily or permanently storing, one or more token limits, in particular limits of the monetary value of the token. For instance, the limit storage unit may include a data storage or a memory. The data storage or the memory may be included in the limit storage unit or may be arranged external to the limit storage unit, wherein the data storage or memory is directly communicatively coupled to the limit storage unit. Additionally, when the data storage or the memory may be included in the limit storage unit or may be arranged external to the limit storage unit, the limit storage unit further comprises a processing unit for transmitting at least one dynamic token limit to be stored to the data storage or the memory and for receiving at least one stored dynamic token limit from the data storage or the memory.

The offline token transaction unit of the hosted service provider offline transaction unit may represent any unit of the hosed service provider offline transaction unit configured for checking if an offline token transaction meets, i.e. fulfills or is in the range of, the dynamic token limit. Additionally, the offline token transaction unit may be configured for providing and/or receiving at least one offline token transaction to at least one other secure token transaction unit. Furthermore, the offline token transaction unit may be configured for providing an/ or receiving at least one holding permission to at least one other secure token transaction unit.

The common service provider may be any provider of common services. Preferably, the common service provider is the operator of the secure token transaction system, e.g. the central bank, CB. For instance, the common service provider may be a central bank, CB, but is not limited thereto.

The monitoring unit may present any unit being configured for monitoring the offline token transaction system. The monitoring unit may be located respectively arranged in the offline token transaction system but is not limited thereto. For instance, the monitoring unit monitors the correctness of the system functions, the AML, and/or the sum of the values in the token register but is not limited thereto.

The minting unit may represent any unit being configured for minting, i.e. generating, at least one token of the electronic token transaction system. For instance, the minting unit may be an authorized unit or authority or common service provider like the central bank, CB, being allowed to mint at least one token. Additionally, the mining unit may be configured for melting, i.e. destroying or deleting, at least one token. The minting unit may be arranged respectively located in the offline token transaction system but is not limited thereto.

The foreign exchange unit may represent any unit being configured for exchanging at least one offline token, in particular the monetary value of the offline token, having a first currency, e.g. Euro or US Dollar, to at least one other foreign currency or to at least one other foreign token but is not limited thereto. The foreign exchange unit may comprise a list or tabular including updated, i.e. up-to-date, exchange rates of a plurality of different currencies. The foreign exchange unit may be located respectively arranged in the offline token transaction system but is not limited thereto.

The service directory service may represent any unit configured for identifying the existing service provider units included in the electronic token transaction system. Additionally, the service directory service may be configured for indicate, show or describe what kind of service each service provider unit provides. For instance, the service directory service may comprise a list or tabular in which the service or services of each one of the service provider units is listed. The service directory service may be located or arranged external to the online transaction system and the offline token transaction system but is not limited thereto.

The transaction log unit may represent any data logger logging the transaction data, i.e. data of the at least one transaction. The transaction log unit may be configured for logging the offline token transaction system and/or the online transaction system. The transaction log unit may be arranged or located external to the online transaction system and the offline token transaction system but is not limited thereto.

The system monitoring unit may represent any unit being configured for monitoring respectively checking the whole electronic token transaction system. For instance, the system monitoring unit monitors the electronic token transaction system with respect to forbidden financial practices like money laundry but is not limited thereto. The system monitoring unit may be located or arranged external to the online transaction system and the offline token transaction system but is not limited thereto.

The user directory service unit may represent any unit being configured for providing respectively generating at least one dynamic offline token limit instruction. Further, the user directory service unit may be configured for transmitting the provided at least one dynamic offline token limit instruction to an offline token limit instruction receiving unit of the service provider unit. Further, the user directory service unit may be configured for providing/transmitting holding permission to the offline token limit instruction receiving unit of the service provider unit. The user directory service unit may be further configured for managing the dynamic token limit, in particular for separating the dynamic token limit into a dynamic offline token limit and/or in a dynamic online token limit but is not limited thereto. Further, the user directory service unit may be configured for providing user information like the user name or the secure token transaction unit ID but is not limited thereto. The user directory service unit may be arranged respectively located external to the online transaction system and the offline token transaction system but is not limited thereto.

The token register may represent any unit of an electronic token transaction unit being configured for registering respectively verifying or deleting a token, in particular registering, verifying, or deleting a token reference (r) of a valid token of the electronic token transaction system from or in the token register. In other words, the registration or deletion of the token in the token register, based on security-, verification- and registration-purposes, is provided by storing only the token reference (r) of all valid tokens in the token register without knowing the tokens itself, i.e. without knowing the rest of the token like the value (v) etc.. So, the user can check validity of a received token with dedicated requests send to the token register. Tokens can be further modified by each user of the electronic token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

The offline token in preferred embodiments at least comprises a token individual token secret and the monetary value as token data elements. A token individual token reference is preferably derivable from the token individual token secret, e.g. as a public key of a private.... .

By providing a dynamic token limit, it can be provided a possibility for updating the token limits in an easy and fast manner.

In a preferred embodiment of the secure token transaction unit, the offline token transaction unit is further configured for providing at least one offline token transaction to at least one other secure token transaction unit and/or for receiving at least one offline token transaction from at least one other secure token transaction unit.

In a preferred embodiment of the secure token transaction unit, the offline token transaction unit (103) is further configured for providing at least one holding permission to at least one other secure token transaction unit and/or for receiving least one holding permission from at least one other secure token transaction unit.

In a preferred embodiment of the secure token transaction unit, the dynamic token limit, in particular a dynamic monetary value limit of the token transaction unit, may be included in a remotely updatable data element and/or in one or more holding permissions. In other words, the dynamic token limit, in particular a dynamic monetary value limit of the token transaction unit, may consist of a remotely updatable limit and/or one or more holding permissions.

In a preferred embodiment of the secure token transaction unit, the secure token transaction unit further comprises a dynamic token limit update receiving unit configured for receiving at least one dynamic token limit update from at least one service provider unit and configured for updating the dynamic token limit in the limit storage unit.

In another aspect of the invention there is provided a service provider unit. The service provider unit comprises an offline token limit managing unit configured for managing a dynamic token limit of at least one service token transaction unit, preferably of at least one service token transaction unit as described above; and/or a common internal bridge unit configured for exchanging and optionally transmitting/receiving an offline token from the service provider unit to at least one secure token transaction unit. The term internal may represent that the bridge unit is included in the common service provider.

In a preferred embodiment of the service provider unit, the offline token limit managing unit comprises an offline token limit providing unit configured for providing a dynamic offline token limit update to a dynamic token limit update receiving unit of at least one secure token transaction unit.

In a preferred embodiment of the service provider unit, the offline token limit managing unit comprises a dynamic offline token limit instruction receiving unit configured for receiving a dynamic offline token limit instruction from a common service provider.

In a preferred embodiment of the service provider unit, the service provider unit further comprises at least one hosted secure token transaction unit including: a token storage unit configured for storing at least one token of the electronic token transaction system; a limit storage unit configured for storing at least one dynamic token limit, in particular a dynamic monetary value limit of the token transaction unit; and an offline token transaction unit configured for checking if an offline token transaction meets the dynamic token limit.

In another aspect of the invention there is provided a common internal bridge unit of a common service provider. The internal bridge unit comprises at least one hosted service provider offline token transaction unit, wherein the at least one hosted secure token transaction unit includes a limit storage unit configured for storing at least one dynamic token limit, in particular the dynamic monetary value limit of the token transaction unit; and an offline token transaction unit configured for checking if an offline token transaction meets the dynamic token limit.

In a preferred embodiment of the internal bridge unit, the internal bridge unit further comprises a token storage unit configured for storing at least one token of the electronic token transaction system.

In another aspect of the invention there is provided an electronic token transaction system comprising an online transaction system and an offline token transaction system. The offline token transaction system includes a token register, at least one secure token transaction unit as described above, wherein the at least one token transaction unit checks the dynamic token limit; and/or a service provider unit as described above; and/or a common internal bridge unit as described above. The online transaction system may be an token transaction system of an account transaction system.

In a preferred embodiment of the electronic token transaction system, the offline token transaction system further includes at least one of the following: a monitoring unit configured for monitoring the offline token transaction system; a minting unit configured for minting and/or melting at least one token of the electronic token transaction system; a foreign exchange unit configured for exchanging at least one offline token to at least one other foreign currency; and/or the electronic token transaction system further comprises at least one of the following: a service directory service configured for identifying the service provider units included in the electronic token transaction system; a transaction log unit configured for logging the transactions of the electronic token transaction system; and a system monitoring unit configured for monitoring the whole electronic token transaction system with respect to money laundry.

In a preferred embodiment of the electronic token transaction system, the electronic token transaction system further comprises a user directory service unit configured for providing at least one dynamic offline token limit instruction and for transmitting the provided at least one dynamic offline token limit instruction to an offline token limit instruction receiving unit of the service provider unit.

In another aspect of the invention there is provided a method for issuing a secure token transaction unit. The method comprises the steps of providing at least one secure token transaction unit including a limit storage unit, wherein the limit storage unit has a zero dynamic token limit, receiving by a dynamic token limit update receiving unit at least one dynamic offline token limit update, adding the dynamic token limit to the limit storage unit, checking by the secure token transaction unit if at least one offline token transaction meets the dynamic token limit, and issuing the secure token transaction unit.

In another aspect of the invention there is provided a method for issuing a secure token transaction unit. The method comprises the steps of providing at least one secure token transaction unit, wherein the provided at least one secure token transaction unit includes a limit storage unit having a first dynamic token limit, receiving by a dynamic token limit update receiving unit at least one dynamic offline token limit update, updating the first dynamic token limit of the limit storage unit to a second dynamic token limit, wherein the first dynamic token limit is lower than the second dynamic token limit or the first dynamic token limit is higher than the second dynamic token limit, checking by the secure token transaction unit if at least one offline token transaction meets the second dynamic token limit, and issuing the secure token transaction unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure token transaction unit.
Fig. 2 shows an exemplary embodiment of a service provider unit.
Fig. 3 shows an exemplary embodiment of a common internal bridge unit.
Fig. 4 shows an exemplary embodiment of an electronic token transaction system.
Fig. 5 shows an exemplary embodiment of a method for issuing a secure token transaction unit.
Fig. 6 shows an exemplary embodiment of another method for issuing a secure token transaction unit.

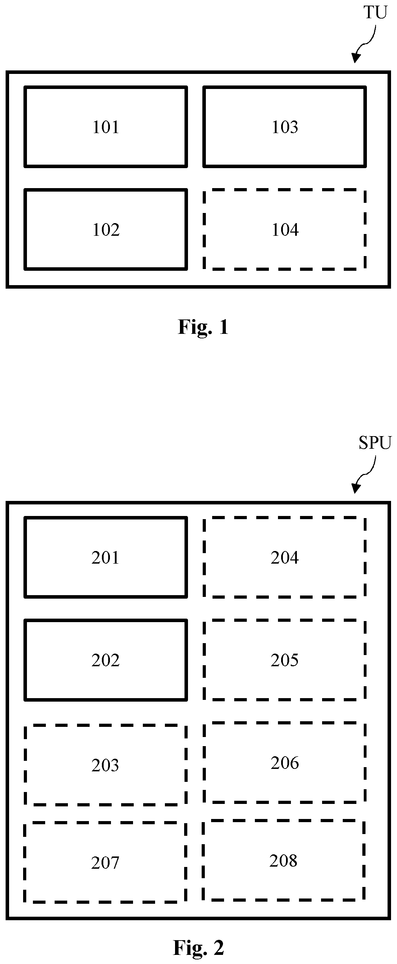

In Fig. 1, there is depicted an exemplary embodiment of a secure token transaction unit. The secure token transaction unit TU comprises a token storage unit 101, a limit storage unit 102, and an offline token transaction unit 103. The token storage unit 101 is configured for storing at least one token of the electronic token transaction system. The limit storage unit 102 is configured for storing at least one dynamic token limit, in particular a dynamic monetary value limit of the token transaction unit. The offline token transaction unit 103 is configured for checking if an offline token transaction meets the dynamic token limit.

Optionally the secure token transaction unit TU further comprises a dynamic token limit update receiving unit 104. The dynamic token limit update receiving unit 104 is configured for receiving at least one dynamic limit update from at least one service provider unit SPU and configured for updating the dynamic token limit in the limit storage unit 102.

In Fig. 2, there is depicted an exemplary embodiment of a service provider unit. The service provider unit SPU comprises an offline token limit managing unit 201 and/or a common internal bridge unit 202. The offline token limit managing unit 201 is configured for managing a dynamic token limit of at least one service token transaction unit TU, preferably of at least one service token transaction unit TU as described above. The internal bridge unit 202 is configured for exchanging and optionally transmitting/receiving an offline token from the service provider unit SPU to at least one secure token transaction unit TU.

Optionally, the offline token limit managing unit 201 comprises an offline token limit providing unit 203. The offline token limit providing unit 203 is configured for providing a dynamic offline token limit update to a dynamic token limit update receiving unit 104 of at least one secure token transaction unit TU.

Optionally, the offline token limit managing unit 201 comprises a dynamic offline token limit instruction receiving unit. The dynamic offline token limit instruction receiving unit is configured for receiving a dynamic offline token limit instruction from a common service provider.

Optionally, the service provider unit further comprises at least one hosted secure token transaction unit 205. The at least one hosted secure token transaction unit 205 includes a token storage unit 206, a limit storge unit 207, and an offline token transaction unit 208. The token storage unit 206 is configured for storing at least one token of the electronic token transaction system. The limit storage unit 207 is configured for storing at least one dynamic token limit, in particular a dynamic monetary value limit of the token transaction unit. The offline token transaction unit 208 is configured for checking if an offline token transaction meets the dynamic token limit.

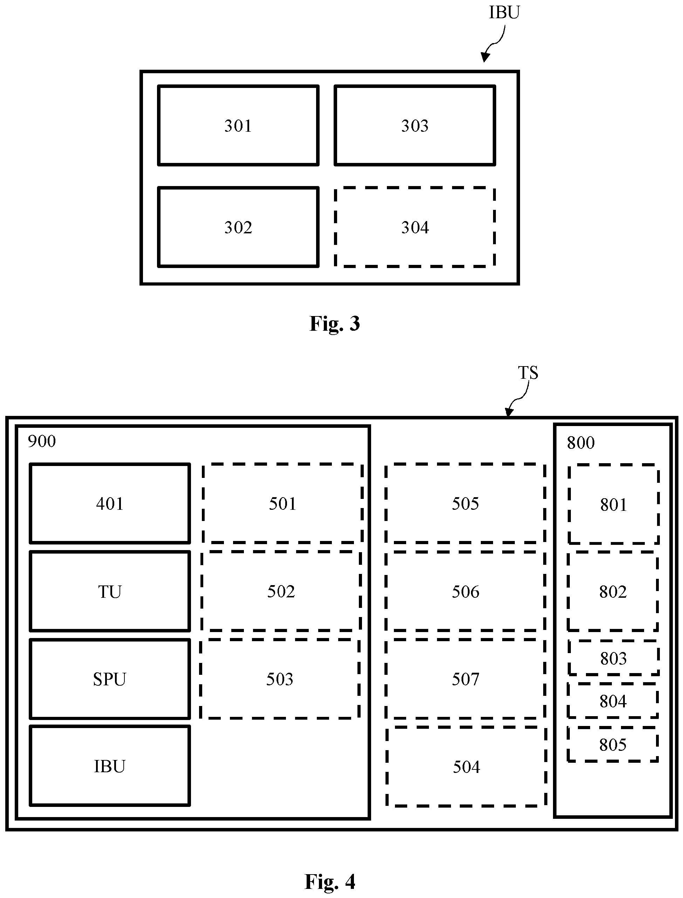

In Fig. 3, there is depicted an exemplary embodiment of a common internal bridge unit. The internal bridge unit IBU of a common service provider, comprises at least one hosted service provider offline token transaction unit 301. The at least one hosted secure token transaction unit 301 includes a limit storage unit 302 and an offline token transaction unit 303. The limit storage unit 302 is configured for storing at least one dynamic token limit, in particular the dynamic monetary value limit of the token transaction unit. The offline token transaction unit 303 is configured for checking if an offline token transaction meets the dynamic token limit.

Optionally, the internal bridge unit IBU further comprises a token storage unit 304. The token storage unit 304 is configured for storing at least one token of the electronic token transaction system.

In Fig. 4, there is depicted an exemplary embodiment of an electronic token transaction system. The electronic token transaction system TS comprises an online transaction system 800 and an offline token transaction system 900. The offline token transaction system 900 includes a token register 401, at least one secure token transaction unit TU as described above, a service provider unit SPU as described above, and/or a common internal bridge unit IBU as described above. The at least one token transaction unit TU checks the token limit.

Optionally, the offline token transaction system 900 further includes at least one of the following: a monitoring unit 501 configured for monitoring the offline token transaction system, a minting unit 502 configured for minting and/or melting at least one token of the electronic token transaction system, a foreign exchange unit 503 configured for exchanging at least one offline token to at least one other foreign currency. Additionally or alternatively, the electronic token transaction system TS further comprises at least one of the following: a service directory service 504 configured for identifying the service provider units included in the electronic token transaction system, a transaction log unit 505 configured for logging the transactions of the electronic token transaction system, and a system monitoring unit 506 configured for monitoring the whole electronic token transaction system with respect to money laundry. Both the online transaction system 800 and the offline token transaction system 900 are directly or indirectly communicatively coupled to the user directory service unit 507, the system monitoring unit 506, the transaction log 505, the service directory service 504 and/or the internal bridge unit. The term internal may represent that the bridge unit is included in the common service provider.

Optionally, the electronic token transaction system TS further comprises a user directory service unit 507. The user directory service unit 507 is configured for providing at least one dynamic offline token limit instruction and for transmitting the provided at least one dynamic offline token limit instruction to an offline token limit instruction receiving unit 204 of the service provider unit SPU.

The online transaction system 800 may comprise at least one of an online secure token transaction unit 801, an online transaction request handler 802, an online transaction unit 803, a monitoring unit 804, foreign exchange unit 805 but is not limited thereto. The monitoring unit 804 may present any unit being configured for monitoring the online transaction system 800. The monitoring unit 804 may be located respectively arranged in the online transaction system 800 but is not limited thereto. The foreign exchange unit 805 may represent any unit being configured for exchanging at least one online token, in particular the monetary value of the online token, having a first currency, e.g. Euro or US Dollar, to at least one other foreign currency or to at least one other foreign token but is not limited thereto. The foreign exchange unit may comprise a list or tabular including updated, i.e. up-to-date, exchange rates of a plurality of different currencies. The foreign exchange unit may be located respectively arranged in the online transaction system but is not limited thereto. The online token transaction unit 803 may represent any unit of the online transaction system 800, configured for providing and/or receiving at least one online token transaction to at least one other secure token transaction unit. The online secure token transaction unit 801 may represent any unit being configured for storing online and/or offline token, in particular only online token, to be directly exchanged between users/participants of an electronic token transaction system. The online secure electronic token transaction unit 801 may be called a wallet, a payment application unit or a secure element but is not limited thereto. The online token transaction request handler 802 may represent any unit being configured for transmitting an online token transaction request from an online secure token transaction unit 801 to the online token transaction unit 803.

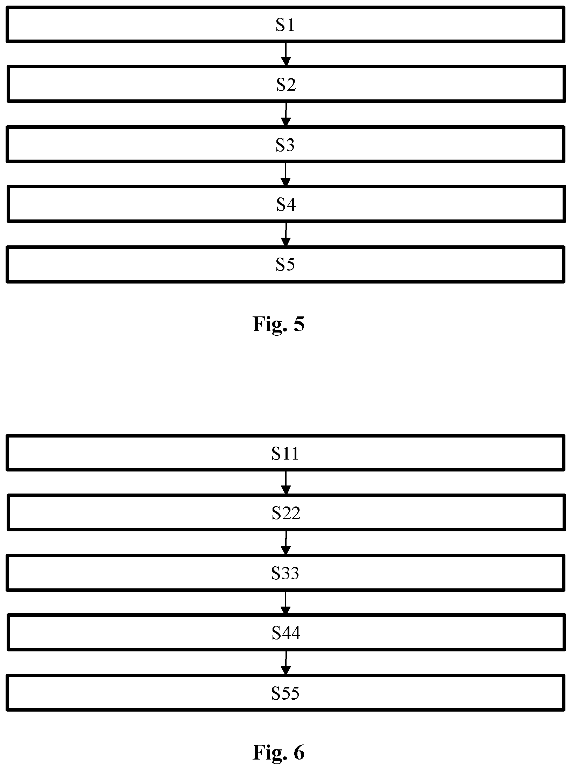

In Fig. 5, there is depicted an exemplary embodiment of a method for issuing a secure token transaction unit. In a first step S1, at least one secure token transaction unit TU is provided including a limit storage unit 102. The limit storage unit 102 has a zero dynamic token limit. In a second step S2, at least one dynamic offline token limit update is received by a dynamic token limit update receiving unit 104. In a third step S3, the dynamic token limit is added to the limit storage unit 102. In a fourth step S4, it is checked by the secure token transaction unit if at least one offline token transaction meets the dynamic token limit. In a fifth step S5, the secure token transaction unit TU is added.

In Fig. 6, there is depicted an exemplary embodiment of another method for issuing a secure token transaction unit. In a first step S11 of the method, at least one secure token transaction unit TU is provided. The provided at least one secure token transaction unit TU includes a limit storage unit 102 having a first dynamic token limit. In a second step S22, at least one dynamic offline token limit update is received by a dynamic token limit update receiving unit 104. In a third step S33, the first dynamic token limit of the limit storage unit 102 is updated to a second dynamic token limit. The first dynamic token limit is lower than the second dynamic token limit or the first dynamic token limit is higher than the second dynamic token limit. In a fourth step S44, it is checked by the secure token transaction unit TU if at least one offline token transaction meets the second dynamic token limit. In a fifth step S55, the secure token transaction unit TU is issued.

### REFERENCE SIGNS

- TU: secure token transaction unit
- SPU: service provider unit
- IBU: internal bridge unit
- TS: electronic token transaction system
- 101: token storage unit
- 102: limit storage unit
- 103: offline token transaction unit
- 104: dynamic token limit update receiving unit
- 201: offline token limit managing unit
- 202: internal bridge unit
- 203: offline token limit providing unit
- 204: dynamic offline token limit instruction receiving unit
- 205: hosted secure token transaction unit
- 206: token storage unit
- 207: limit storage unit
- 208: offline token transaction unit
- 301: hosted service provider offline token transaction unit
- 302: limit storage unit
- 303: offline token transaction unit
- 304: token storage unit
- 401: token register
- 501: monitoring unit
- 502: minting unit
- 503: foreign exchange unit
- 504: service directory service
- 505: transaction log unit
- 506: system monitoring unit
- 507: user directory service unit
- 800: online transaction system
- 801: online secure token transaction unit
- 802: online token transaction request handler
- 803: online token transaction unit
- 804: system monitoring unit
- 805: foreign exchange unit
- 900: offline token transaction system
- S1: providing step
- S2: receiving step
- S3: adding step
- S4: checking step
- S5: issuing step
- S11: providing step
- S22: receiving step
- S33: updating step
- S44: checking step
- S55: issuing step

## Claims

1. A secure token transaction unit (TU) comprising:
a token storage unit (101) configured for storing at least one token of the electronic token transaction system (TS);
a limit storage unit (102) configured for storing at least one dynamic token limit, in particular a dynamic monetary value limit of the token transaction unit; and
an offline token transaction unit (103) configured for checking if an offline token transaction meets the dynamic token limit.

2. The secure token transaction unit (TU) according to claim 1, wherein the offline token transaction unit (103) is further configured for providing at least one offline token transaction to at least one other secure token transaction unit and/or for receiving at least one offline token transaction from at least one other secure token transaction unit.

3. The secure token transaction unit (TU) according to any one of the preceding claims, wherein the offline token transaction unit (103) is further configured for providing at least one holding permission to at least one other secure token transaction unit and/or for receiving at least one holding permission from at least one other secure token transaction unit.

4. The secure token transaction unit (TU) according to any one of the preceding claims, wherein the dynamic token limit, in particular a dynamic monetary value limit of the token transaction unit, may be included in a remotely updatable data element and/or in one or more holding permissions.

5. The secure token transaction unit (TU) according to any one of the preceding claims, further comprising:
a dynamic token limit update receiving unit (104) configured for receiving at least one dynamic token limit update from at least one service provider unit (SPU) and configured for updating the dynamic token limit in the limit storage unit (102).

6. A service provider unit (SPU) comprising:
an offline token limit managing unit (201) configured for managing a dynamic token limit of at least one service token transaction unit (TU), preferably of at least one service token transaction unit (TU) according to any one of claims 1 to 5; and/or
a common internal bridge unit (202) configured for providing an offline-online-exchange of the electronic token transaction system (TS),
and optionally transmitting/receiving an offline token from the service provider unit (SPU) to at least one secure token transaction unit (TU).

7. The service provider unit (SPU) according to claim 6, wherein the offline token limit managing unit (201) comprises:
an offline token limit providing unit (203) configured for providing a dynamic offline token limit update to a dynamic token limit update receiving unit (104) of at least one secure token transaction unit (TU).

8. The service provider unit (SPU) according to claims 6 or 7, wherein the offline token limit managing unit (201) comprises:
a dynamic offline token limit instruction receiving unit (204) configured for receiving a dynamic offline token limit instruction from a common service provider.

9. The service provider unit (SPU) according to any one of the claims 6 to 8, further comprising:
at least one hosted secure token transaction unit (205) including:
a token storage unit (206) configured for storing at least one token of the electronic token transaction system;
a limit storage unit (207) configured for storing at least one dynamic token limit, in particular a dynamic monetary value limit of the token transaction unit; and
an offline token transaction unit (208) configured for checking if an offline token transaction meets the dynamic token limit.

10. A common internal bridge unit (IBU) of a common service provider, comprising:
an internal bridge unit (202) configured for exchanging an offline token from / to an online transaction system in the electronic token transaction system (TS),
at least one hosted service provider offline token transaction unit (301),
wherein the at least one hosted secure token transaction unit (301) includes:
a limit storage unit (302) configured for storing at least one dynamic token limit, in particular the dynamic monetary value limit of the token transaction unit; and
an offline token transaction unit (303) configured for checking if an offline token transaction meets the dynamic token limit.

11. The internal bridge unit (IBU) according to claim 10, the at least one hosted service provider offline token transaction unit (301) further comprises:
a token storage unit (304) configured for storing at least one token of the electronic token transaction system.

12. An electronic token transaction system (TS) comprising:
an online transaction system (800) and an offline token transaction system (900),
wherein the offline token transaction system (900) includes:
a token register (401); and
at least one secure token transaction unit (TU) according to any one of the claims 1 to 5, wherein the at least one token transaction unit (TU) checks the dynamic token limit; and/or
a service provider unit (SPU) according to any one of the claims 6 to 9; and/or
a common internal bridge unit (IBU) according to claims 10 or 11.

13. The electronic token transaction system (TS) according to claim 12,
wherein the offline token transaction system (900) further includes at least one of the following:
a monitoring unit (501) configured for monitoring the offline token transaction system;
a minting unit (502) configured for minting and/or melting at least one token of the electronic token transaction system; and
a foreign exchange unit (503) configured for exchanging at least one offline token to at least one other foreign currency; and/or
wherein the electronic token transaction system (TS) further comprises at least one of the following:
a service directory service (504) configured for identifying the service provider units included in the electronic token transaction system;
a transaction log unit (505) configured for logging the transactions of the electronic token transaction system; and
a system monitoring unit (506) configured for monitoring the whole electronic token transaction system with respect to money laundry.

14. The electronic token transaction system (TS) according to any one of the claims 12 or 13, further comprising:
a user directory service unit (507) configured for providing at least one dynamic offline token limit instruction and for transmitting the provided at least one dynamic offline token limit instruction to an offline token limit instruction receiving unit (204) of the service provider unit (SPU).

15. Method for issuing a secure token transaction unit (TU), comprising:
providing (S1) at least one secure token transaction unit (TU) including a limit storage unit (102),
wherein the limit storage unit (102) has a zero dynamic token limit;
receiving (S2) by a dynamic token limit update receiving unit (104) at least one dynamic offline token limit update;
adding (S3) the dynamic token limit to the limit storage unit (102);
checking (S4) by the secure token transaction unit (TU) if at least one offline token transaction meets the dynamic token limit; and
issuing (S5) the secure token transaction unit (TU).

16. Method for issuing a secure token transaction unit (TU), comprising:
providing (S11) at least one secure token transaction unit (TU),
wherein the provided at least one secure token transaction unit (TU) includes a limit storage unit (102) having a first dynamic token limit;
receiving (S22) by a dynamic token limit update receiving unit (104) at least one dynamic offline token limit update;
updating (S33) the first dynamic token limit of the limit storage unit (102) to a second dynamic token limit,
wherein the first dynamic token limit is lower than the second dynamic token limit or the first dynamic token limit is higher than the second dynamic token limit;
checking (S44) by the secure token transaction unit (TU) if at least one offline token transaction meets the second dynamic token limit; and
issuing (S55) the secure token transaction unit (TU).
